# EUROPÄISCHE PATENTANMELDUNG

(11) **EP 1 064 835 A1**
(43) Veröffentlichungstag der Anmeldung: **03.01.2001**
(21) Anmeldenummer: 00113534.2
(22) Anmeldetag: 27.06.2000
(51) Int. Cl.: A01D 41/14, A01D 69/06

(54) **Verteiler-Getriebe für ein Vorsatzmähwerk**

(30) Priorität: 01.07.1999 DE 19930099
(71) Anmelder: SAME DEUTZ-FAHR S.P.A., 24047 Treviglio (Bergamo) (IT)
(72) Erfinder: Berghorn, Hermann, 89426 Wittislingen (DE); Fritz, Hermann, 89440 Lutzingen (DE)
(74) Vertreter: Quinterno, Giuseppe

(57) **Zusammenfassung**

Es wird ein Verteiler-Getriebe (1) für ein Vorsatztmähwerk eines Mähdreschers vorgeschlagen, bei welchem die Drehachsen der Antriebswelle (3) und der Abtriebswellen (5, 7) einen Winkel einschließen. Dadurch wird der Aufbau des Vorsatzmähwerks vereinfacht und die angetriebenen Aggregate können besser bezüglich des Verteiler-Getriebes (1) positioniert werden.

## Beschreibung

Die Erfindung betrifft ein Verteilergetriebe für ein Vorsatzmähwerk nach dem Oberbegriff des Anspruchs 1.

Verteilergetriebe in Vorsatzmähwerken treiben über eine Exzenterwelle ein Mähmesser und über eine Kupplung eine Speisepumpe an. Dabei liegen die Drehachsen der Exzenterwelle und der Antriebswelle der Speisepumpe parallel. In vielen Fällen fallen die genannten Drehachsen sogar ineinander. Der Antrieb dieser bekannten Verteilergetriebe erfolgt in der Regel über eine zwischen Speisepumpe und Exzenterwelle angeordnete Riemenscheibe, deren Drehachse ebenfalls mit den Drehachsen der Eingangswelle dar speisepumpe und der Exzenterwelle zusammmenfällt.

Nachteilig an dieser Konstruktion ist, dass bei einem Wechsel des die Riemenscheibe antreibenden Keil- oder Zahnriemens zumindest die Kupplung zwischen Speisepumpe und Verteilergetriebe entfernt werden. Außerdem ist es erforderlich, die Speisepumpe genau bezüglich des Verteilergetriebes zu positionieren, um zu vermeiden, dass Fluchtungsfehler zwischen der Abtriebswelle des Verteilergetriebes und der Eingangswelle der Speisepumpe entstehen. Wenn die Speisepumpe nicht exakt positioniert ist, führt dies zu einem vorzeitigen Verschleiß der Wellenlagerungen und der Speisepumpe. Außerdem ist die bekannte Konstruktion sehr aufwendig, da eine Konsole zum Befestigen der Speisepumpe und eine aus mehreren Bauteilen bestehende Kupplung vorgesehen werden müssen.

Weitere auf dem Markt befindliche Lösungen für Vorsatzmähwerke, insbesondere Pumpenantriebe werden als separate Abtriebe wie beispielsweise Keilriemenantriebe ausgeführt. Diese Lösungen sind wartungsaufwendig und teuer.

Der Erfindung liegt die Aufgabe zugrunde, ein Verteilergetriebe für ein Vorsatzmähwerk bereitzustellen, das einfacher in der Herstellung ist, bei dem die Positionierung der Speisepumpe bezüglich des Verteilergetriebes einfach möglich ist und bei dem die Wartung und Instandhaltung erleichtert wird.

Diese Aufgabe wird gelöst durch ein Verteilergetriebe für ein Vorsatzmähwerk mit einer Antriebswelle, mit einer ersten Abtriebswelle und mit einer zweiten Abtriebswelle, wobei die erste und die zweite Abtriebswelle in entgegengesetzter Richtung aus dem Verteilergetriebe ragen und die Drehachsen der ersten und der zweiten Abtriebswelle parallel zueinander verlaufen und wobei die Drehachse der Antriebswelle und die Drehachsen der Abtriebswellen einen Winkel einschließen.

Durch diese Anordnung der Antriebswelle und der Abtriebswellen wird eine räumliche Trennung der drei Wellen erreicht. Dadurch wird die Montage bzw. Wartung und Instandhaltung des Verteilergetriebes vereinfacht. Außerdem kann die Speisepumpe näher an dem Verteilergetriebe angeordnet sein, da der für einen Riemenwechsel erforderliche Platz entfällt. In Folge dessen wird die Positionierung der Speisepumpe relativ zum Verteilergetriebe erleichtert.

Eine Variante der Erfindung sieht vor, dass der von der Drehachse der Antriebswelle und den Drehachsen der Abtriebswellen eingeschlossene Winkel 90° beträgt, so dass der räumliche Abstand zwischen den Enden der drei Wellen maximal wird.

Bei einer anderen Ausführung der Erfindung fallen die Drehachsen von erster und zweiter Abtriebswelle ineinander, so dass der Platzbedarf für das Verteilergetriebe minimal wird.

In Ergänzung der Erfindung ist vorgesehen, dass das Verteilergetriebe ein Kegelradgetriebe, ein Hypoidgetriebe, ein Schneckengetriebe oder ein Schraubradgetriebe ist, so dass eine optimale Anpassung an die Betriebsbedingungen möglich ist.

Bei einer weiteren Ausführungsform ist vorgesehen, dass die erste Abtriebswelle und/oder die zweite Abtriebswelle in einem Deckel eines Getriebegehäuses gelagert ist, so dass die Lagerung der Abtriebswellen einfach gewartet und gegebenenfalls ausgewechselt werden kann.

Bei einer weiteren Ausgestaltung der Erfindung trägt die erste Abtriebswelle über einen Exzenter ein Mähmesser an, so dass eine weitere Antriebseinrichtung vermieden wird.

Bei einer anderen Ausführungsform treibt die zweite Abtriebswelle ein Zusatz-Aggregat an, so dass der Antrieb des Zusatz-Aggregats einfach und kostengünstig ist.

Eine Variante sieht vor, dass die zweite Abtriebswelle die Eingangswelle des Zusatz-Aggregats ist, so dass der Antrieb des Zusatz-Aggregats direkt erfolgt, weil dieses noch näher an dem Verteilergetriebe angeordnet werden kann, und die Bauweise sehr kompakt ist. Außerdem wird die Zahl der Bauteile reduziert, weil eine Kupplung entfällt.

In weiterer Ausgestaltung der Erfindung ist vorgesehen, dass das Zusatz-Aggregat eine als Pumpe mit einem oder mehreren Auslässen ausgeführte Speisepumpe ist, so dass ein oder mehrere hydraulisch angetriebene Zusatzaggregate betrieben werden können.

Bei einer anderen Ausgestaltung der Erfindung wird das Zusatz-Aggregat über eine Keilriemenscheibe oder eine Gelenkwelle angetrieben, so dass verschiedenste Zusatz-Aggregate bedarfsgerecht antreibbar sind.

Bei einer weiteren Ausgestaltung der Erfindung ist das Zusatz-Aggregat mit einem Deckel des Verteiler-Getriebes verbunden, so dass die Zahl der Bauteile weiter verringert und eine besonders kompakte Bauweise erreicht wird.

In Ergänzung der Erfindung ist vorgesehen, dass die Antriebswelle eine Riemenscheibe aufweist, so dass der Antrieb des Verteilergetriebes einfach und zuverlässig erfolgt und die Genauigkeitsanforderungen gering sind.

In Ergänzung der Erfindung ist vorgesehen, dass das Vorsatzmähwerk an einem Mähdrescher angeordnet ist, so dass die Arbeitsweise des Mähdreschers verbessert wird.

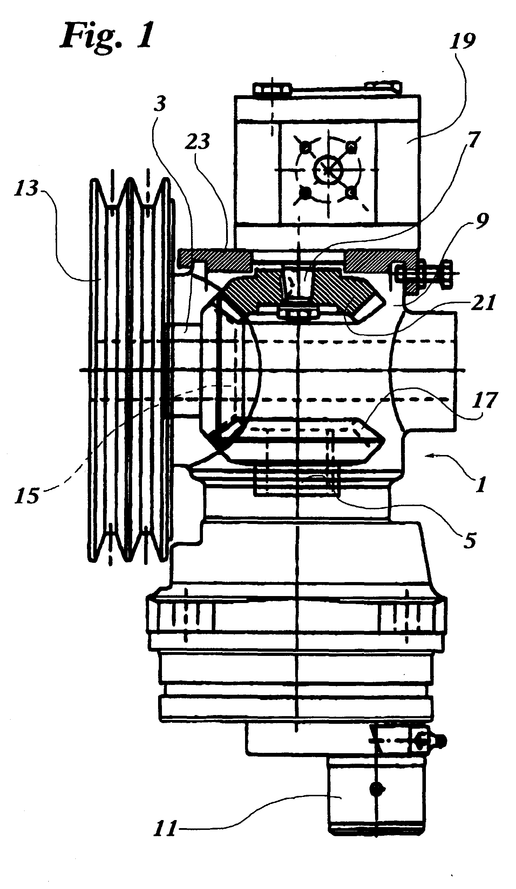

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstands der Erfindung ist in der Zeichnung als Teilschnitt dargestellt und im Folgenden näher beschrieben.

Das verteilergetriebe 1 weist eine Antriebswelle 3, eine erste Abtriebswelle 5 und eine zweite Abtriebswelle 7 auf. Die Antriebswelle 3 und die erste Abtriebswelle 5 sind in einem Getriebegehäuse 9 gelagert. Einzelheiten der Lagerung sind in der Zeichnung nicht dargestellt. An die erste Abtriebswelle 5 schließt sich eine Exzenterwelle 11 an, die ein nicht dargestelltes Mähmesser antreibt.

Auf die Antriebswelle 3 ist eine Riemenscheibe 13 aufgeschoben. Über nicht dargestellte Keilriemen wird die Riemenscheibe und mit ihr die Antriebswelle 3 angetrieben.

Am anderen Ende der Antriebswelle 3 ist ein erstes Kegelrad 15 angeordnet. Das erste Kegelrad 15 kämmt mit einem zweiten Kegelrad 17, welches mit der ersten Abtriebswelle 5 drehfest verbunden ist.

Außerdem ist eine Speisepumpe 19 dargestellt, die über ein drittes Kegelrad 21 und die zweite Abtriebswelle 7 angetrieben wird. Bei dem in der Zeichnung dargestellten Ausführungsbeispiel ist die zweite Abtriebswelle 7 gleichzeitig die Eingangswelle der Speisepumpe 19. Dadurch verringert sich die Zahl der Bauteile, Fluchtungsfehler werden vermieden, wenn nicht sogar ausgeschlossen, und schließlich baut diese Anordnung besonders kompakt.

Das dritte Kegelrad 21 kämmt ebenfalls mit dem ersten Kegelrad 15, so dass auch die Speisepumpe 19 von der Antriebswelle 3 angetrieben wird.

Der Zeichnung ist entnehmbar, dass die Speisepumpe 19 auf einem Deckel 23 des Getriebegehäuses 9 angebracht ist. Diese Anordnung hat den Vorteil, dass ein handelsübliches Winkelgetriebe auf einfache Art und Weise in ein Verteilergetriebe 1 umgebaut werden kann. Dazu ist es lediglich erforderlich, den Deckel des Getriebegehäuses 9 gegen einen Deckel 23 auszutauschen, an dem eine Speisepumpe 19 oder ein anderes Aggregat angebracht ist. Der Deckel 23 ist bezüglich des Getriebegehäuses 9 durch Nuten, Passhülsen, Stifte od.dgl. fixiert, so dass auch die Position des dritten Kegelrads 21 bezüglich des zweiten Kegelrads 17 festgelegt ist.

Der Deckel kann auch stirnseitig befestigt werden, indem nicht dargestellte Gußansätze mit Innengewinde im Getriebegehäuse 9 vorgesehen werden und der Deckel 23 oder die Speisepumpe 19 mittels in diese Innengewinde eingedrehten Schrauben befestigt wird.

Neben den bereits erwähnten Vorteilen dieser Anordnung, wie beispielsweise geringen Herstellungs- und Entwicklungskosten durch Verwendung eines handelsüblichen Winkelgetriebes, weist diese Anordnung weitere Vorteile auf. Die Anordnung baut besonders kompakt, da die Speisepumpe 19 unmittelbar an das Verteilergetriebe 1 anschließt. Außerdem entfällt eine Kupplung zwischen zweiter Abtriebswelle 7 und Eingangswelle der Speisepumpe 19. Die Wartung des erfindungsgemäßen Verteilergetriebes 1 ist erleichtert, indem die Speisepumpe 19 ohne weiteres von dem Getriebegehäuse 9 entfernt werden kann. Außerdem kann ein Wechsel der hier nicht dargestellten Keilriemen, welche die Riemenscheibe 13 antreiben, erfolgen, ohne dass die Speisepumpe 19 oder die Exzenterwelle 11 und das hier nicht dargestellte Mähwerk davon betroffen werden.

Diese Vorteile weist auch ein nicht dargestellte Variante auf, bei der die erste Abtriebswelle 5 in einem Deckel des Getriebegehäuses 9 gelagert ist.

Alle in der Beschreibung, den nachfolgenden Ansprüchen und der Zeichnung dargestellten Merkmale kennen sowohl einzeln als auch in beliebiger Kombination miteinander erfindungswesentlich sein.

## Patentansprüche

1. Verteiler-Getriebe (1) für ein Vorsatzmähwerk mit einer Antriebswelle (3), mit einer ersten Abtriebswelle (5) und mit einer zweiten Abtriebswelle (7), wobei die erste (5) und die zweite (7) Abtriebswelle in entgegengesetzter Richtung aus dem Verteiler-Getriebe (1) ragen und die Drehachsen der ersten (5) und der zweiten (7) Abtriebswelle parallel zueinander verlaufen, dadurch gekennzeichnet, dass die Drehachse der Antriebswelle (3) und die Drehachsen der Abtriebswellen (5, 7) einen Winkel einschließen.

2. Verteiler-Getriebe nach Anspruch 1, dadurch gekennzeichnet, dass der von der Drehachse der Antriebswelle (3) und den Drehachsen der Abtriebswellen (5, 7) eingeschlossene Winkel 90° beträgt.

3. Verteiler-Getriebe nach Anspruch 1 oder 2, dadurch gekennzeichnet, dass die Drehachsen von erster (5) und zweiter (7) Abtriebswelle ineinander fallen.

4. Verteiler-Getriebe nach einem der vorhergehenden Ansprüche, dadurch gekennzeichnet, dass das Verteiler-Getriebe (1) ein Kegelradgetriebe, ein Hypoid-Getriebe, ein Schnecken-Getriebe oder ein Schraubrad-Getriebe ist.

5. Verteiler-Getriebe nach einem der vorhergehenden Ansprüche, dadurch gekennzeichnet, dass die erste Abtriebswelle (5) in einem Deckel (23) eines Getriebegehäuses (9) gelagert ist.

6. Verteiler-Getriebe nach einem der vorhergehenden Ansprüche, dadurch gekennzeichnet, dass die zweite Abtriebswelle (7) in einem Deckel eines Getriebegehäuses (9) gelagert ist.

7. Verteiler-Getriebe nach einem der vorhergehenden Ansprüche, dadurch gekennzeichnet, dass die erste Abtriebswelle (5) über einen Exzenter (11) ein Mähmesser antreibt.

8. Verteiler-Getriebe nach einem der vorhergehenden Ansprüche, dadurch gekennzeichnet, dass die zweite Abtriebswelle (7) ein Zusatz-Aggregat (19) antreibt.

9. Verteiler-Getriebe nach Anspruch 8, dadurch gekennzeichnet, dass die zweite Abtriebswelle (7) die Eingangswelle des Zusatz-Aggregats (19) ist.

10. Verteiler-Getriebe nach Anspruch 8 oder 9, dadurch gekennzeichnet, dass das Zusatz-Aggregat eine als Pumpe mit einem oder mehreren Auslässen ausgeführte Speisepumpe (19) ist.

11. Verteiler-Getriebe nach Anspruch 8 oder 10, dadurch gekennzeichnet, dass das Zusatz-Aggregat (19) über eine Keilriemenscheibe oder eine Gelenkwelle angetrieben wird.

12. Verteiler-Getriebe nach einem der Ansprüche 8 bis 11, dadurch gekennzeichnet, dass das Zusatz-Aggregat (19) mit einem Deckel (23) des Verteiler-Getriebes (1) verbunden ist.

13. Verteiler-Getriebe nach einem der vorhergehenden Ansprüche, dadurch gekennzeichnet, dass die Antriebswelle (3) eine Riemenscheibe (13) aufweist.

14. Verteiler-Getriebe nach einem der vorhergehenden Ansprüche, dadurch gekennzeichnet, dass das Vorsatzmähwerk an einem Mähdrescher angeordnet ist.
